# EUROPÄISCHE PATENTSCHRIFT

(11) **EP 1 508 462 B1**
(45) Veröffentlichungstag und Bekanntmachung des Hinweises auf die Patenterteilung: **13.05.2009**
(21) Anmeldenummer: 04018260.2
(22) Anmeldetag: 02.08.2004
(51) Int. Cl.: B60H 1/00, F28D 20/00

(54) **Fahrzeugklimaanlage mit Kältespeicher**
Air conditioner for a vehicle with cold accumulator
Climatiseur pour véhicule avec accumulateur de froid

(30) Priorität: 21.08.2003 DE 10338824
(43) Veröffentlichungstag der Anmeldung: 23.02.2005
(73) Patentinhaber: Behr GmbH & Co. KG, 70469 Stuttgart (DE)
(72) Erfinder: Klingler, Dietrich, Dipl.-Ing., 73540 Heubach (DE); Schmadl, Dieter, Dipl.-Ing., 71672 Marbach (DE); Voigt, Klaus, Dipl.-Ing., 74321 Bietigheim-Bissingen (DE)
(74) Vertreter: Grauel, Andreas

(56) Entgegenhaltungen:
- DE-C1- 4 041 626
- US-A- 4 761 967
- US-A- 5 735 133

## Beschreibung

Die Erfindung betrifft eine Klimaanlage für ein Kraftfahrzeug gemäß dem Oberbegriff des Anspruches 1.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund, warum derartige Fahrzeuge nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kälteleistung nicht bereitstellen kann.

Zur Lösung dieses Problems ist in der EP 0 995 621 A2 vorgeschlagen, den Verdampfer der Klimaanlage durch das beim Abkühlen von feuchter Luft anfallende Kondensat zu vereisen, so dass im Idle-stop-Betrieb, wenn der Motor abgeschaltet ist, die Luft durch das dann abtauende Eis abkühlbar ist. Dieses Verfahren hat jedoch zahlreiche Nachteile. Die Wassermenge, die in der Luft vorhanden ist und die für die Vereisung des Verdampfers notwendig ist, hängt von den klimatischen Umgebungsbedingungen ab. So kann es vorkommen, dass bei geringer Luftfeuchtigkeit nicht genügend Kondenswasser für die Vereisung zur Verfügung steht. Des weiteren ist zur Vereisung des Verdampfers in der Regel ein relativ großer Zeitraum notwendig, so dass diese bekannte Klimaanlage erst nach einer relativ langen Fahrzeit im Idle-stop-Betrieb arbeiten kann. Ein weiteres Problem ist, das in der Regel der Verdampfer ungleichmäßig vereist, so dass der Verdampfer vereiste und nicht vereiste Bereiche aufweist. Des weiteren kann die Vereisung so stark sein, dass die Luft durch den Verdampfer nicht oder nur mit hohem Druckverlust strömen kann. In jedem Fall erzeugt die Eisschicht einen luftseitigen Druckverlust, was zu einer erhöhten Gebläseleistung führt.

Ferner ist aus der DE 101 56 944 A1 eine Klimaanlage für ein Kraftfahrzeug mit in einem Kältemittelkreis angeordnetem Kompressor und Verdampfer zum Abkühlen von zu konditionierender Luft für den Innenraum offenbart, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist anstelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Verdampfer einzeln oder durch beide Verdampfer gemeinsam leitbar ist. Jedoch lassen auch entsprechende Klimaanlagen noch Wünsche offen.

US 4 761 967 offenbart als nächster Stand der Technik eine Klimaanlage gemäß dem Oberbegriff des Anspruchs 1.

Ausgehend von diesem Stand der Technik ist es Aufgabe der Erfindung eine verbesserte Klimaanlage zur Verfügung zu stellen. Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage für ein Kraftfahrzeug vorgesehen mit einem in einem Kältemittelkreislauf angeordnetem Kompressor und einem Verdampfer zum Abkühlen von zu konditionierender Luft für den Innenraum, wobei die Klimaanlage einen Wärmetauscher zum Abkühlen der Luft aufweist, der ein Kältespeichermedium, vorzugsweise eine Salzlösung, enthält, und der Wärmetauscher in einen getrennt ausgebildeten Kreislauf eingebunden ist, welcher einen Speicher für das Kältespeichermedium aufweist. Der Speicher ist doppelzylinderartig mit zwei Kammern ausgebildet, welche das Kältespeichermedium speichern. Dabei kann der Kreislauf in beide Richtungen durchströmt werden, so dass ein Austausch zwischen den beiden Kammern über den Kreislauf möglich ist. Als Trennwand ist eine flexible Membran oder eine starre, verschiebbar ausgebildete Trennwand vorgesehen sein.

Die flexible Membran oder die feste Trennwand, welche die zwei Kammern im Speicher trennt, ist erfindungsgemäß mittels eines Stellantriebs verstellbar. Der Stellantrieb wird hierbei bevorzugt mittels eines Stellmotors und einer Gewindestange angetrieben, wobei der Stellmotor bevorzugt von der Kraftfahrzeug-Batterie versorgt wird.

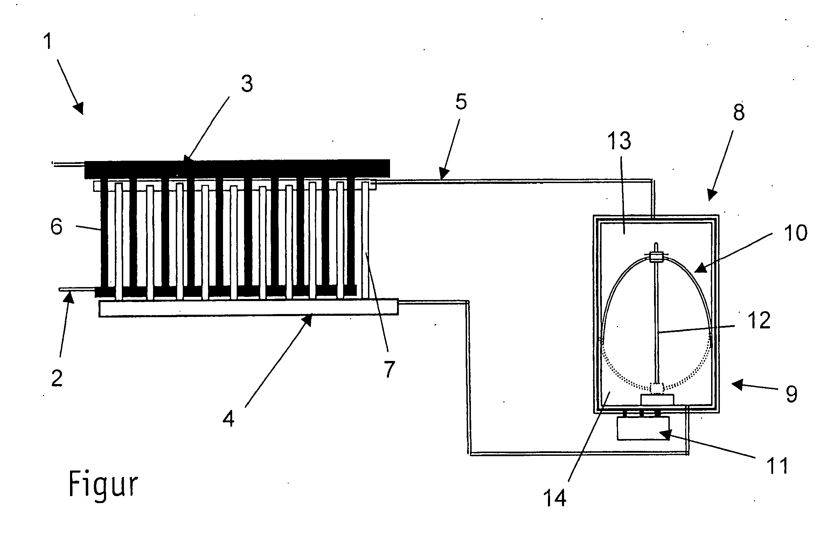

Im Folgenden wird die Erfindung anhand eines Ausführungsbeispiels unter Bezugnahme auf die Zeichnung im Einzelnen erläutert. Die einzige Zeichnung zeigt eine schematische Darstellung eines Teilbereichs der erfindungsgemäßen Klimaanlage.

Eine erfindungsgemäße Klimaanlage 1 (nur teilweise in der Figur dargestellt) weist einen ersten, nur teilweise dargestellten Kältemittelkreislauf 2 auf, in dem ein Kompressor, ein Kältemittelkondensator, ein Expansionsventil und ein Verdampfer 3 über Kältemittelleitungen miteinander verbunden sind. In den Verdampfer 3 integriert ist ein Wärmetauscher 4 ausgebildet, der mit einem Kreislauf 5 verbunden ist. Dabei sind Flachrohre 6 des Verdampfers 3 und Flachrohre 7 des Wärmetauschers abwechselnd angeordnet (siehe Figur).

Beim zweiten Kreislauf handelt es sich um einen geschlossenen Kreislauf, in dem ein isolierter Speicher 8 für das Kältemittel vorgesehen ist. Der Speicher 8 weist eine mit Hilfe eines Stellmotors 9 bewegliche Membran 10 auf, wobei der Stellantrieb 9 einen von der Batterie des Kraftfahrzeugs elektrisch angetriebenen Stellmotor 11 aufweist, welcher über eine Gewindestange 12 die Membran 10 entsprechend positioniert. Der Speicher 8 ist durch die Membran 10 in zwei Kammern 13 und 14 unterteilt, die im Wesentlichen vollständig mit einer Salzlösung als Kältespeichermedium gefüllt sind, jedoch können auch andere kältespeichernden Fluide verwendet werden.

Die Funktion des zweiten Kreislaufs 5 ist Folgende: Im Normalbetrieb, das heißt bei laufendem Kraftfahrzeug-Motor, wird der Speicher 8 aufgeladen, indem das Kältespeichermedium beispielsweise von der Kammer 13 durch den kalten Wärmetauscher 4 in die Kammer 14 gefördert wird. Dafür wird die Membran 10 mit Hilfe des Stellantriebs 9 von einer Stellung, in der die Kammer 13 ihre maximale Größe und die Kammer 14 ihre minimale Größe haben (durchgezogene Linie in der Figur), langsam in eine Stellung bewegt, in der die Kammer 13 ihre minimale Größe und die Kammer 14 ihre maximale Größe haben (gepunktete Linie in der Figur). Durch das langsame Durchströmen des Wärmetauschers 4 wird das Kältespeichermedium gekühlt, so dass es kalt in die Kammer 14 gelangt und dort auf Grund der Isolation des Speichers 8 verweilt bis zu einem Motor-Stopp oder bis das Kältespeichermedium zu warm geworden ist, so dass der Belade-Vorgang wiederholt wird. Im Falle eines Motor-Stopps wird das kalte Kältespeichermedium von einer Kammer 14 oder 13 durch den Wärmetauscher 4 in die andere Kammer 13 beziehungsweise 14 gefördert, wobei es im Wärmetauscher 4 Wärme aufnimmt, also die den Wärmetauscher 4 durchströmende Luft kühlt.

### Bezugszeichenliste

- 1: Klimaanlage
- 2: Kältemittelkreislauf
- 3: Verdampfer
- 4: Wärmetauscher
- 5: Kreislauf
- 6, 7: Flachrohr
- 8: Speicher
- 9: Stellantrieb
- 10: Membran
- 11: Stellmotor
- 12: Gewindestange
- 13, 14: Kammer

## Patentansprüche

1. Klimaanlage für ein Kraftfahrzeug mit einem in einem Kältemittelkreislauf (2) angeordnetem Kompressor und einem Verdampfer (3) zum Abkühlen von zu konditionierender Luft für den Innenraum, wobei die Klimaanlage (1) einen Wärmetauscher (4) zum Abkühlen der Luft aufweist, der ein Kältespeichermedium enthält wobei der wärmetanscher (4) in einen getrennt ausgebildeten Kreislauf (5) eingebunden ist, welcher einen Speicher (8) für das Kältespeichermedium aufweist, **dadurch gekennzeichnet, dass** der Speicher (8) doppelzylinderartig mit zwei Kammern (13, 14) ausgebildet ist und der Speicher (8) eine flexible Membran (10) als Trennwand für die beiden Kammern (13, 14) aufweist und eine flexible Membran (10) oder eine feste Trennwand, welche zwei Kammern (13, 14) im Speicher (8) trennt, mittels eines Stellantriebs (9) verstellbar ist.

2. Klimaanlage nach Anspruch 1, **dadurch gekennzeichnet, dass** der Stellantrieb (9) einen Stellmotor (11) und eine Gewindestange (12) aufweist.

3. Klimaanlage nach einem der vorhergehenden Ansprüche, **dadurch gekennzeichnet, dass** als Kältespeichermedium eine Salzlösung verwendet wird.

4. Verfahren zum Betreiben einer Klimaanlage (1) nach einem der Ansprüche 1 bis 6, **dadurch gekennzeichnet, dass** im Idle-stop-Betrieb ein Stellantrieb (9) betätigt wird, welcher bewirkt, dass ein Kältespeicher-medium durch den wärmetanscher (4) gefördert wird, wobei der Stellantrieb (9) eine Membran (10) oder Trennwand in einem Speicher (8) bewegt, wodurch sich die Größe zweier benachbarter Kammern (13, 14) verändert und ein in den Kammern (13, 14) enthaltenes Kältespeichermedium von einer Kammer (13 oder 14) durch den zweiten Verdampfer (4) in die andere Kammer (14 bzw. 13) gefördert wird.

5. Verfahren nach Anspruch 4, **dadurch gekennzeichnet, dass** im normalen Betrieb die Membran (10) oder Trennwand im Speicher (8) zum Beladen des Speichers (8) in umgekehrter Richtung bewegt wird.

6. Verfahren nach einem der Ansprüche 4 bis 5, **dadurch gekennzeichnet, dass** der Stellantrieb (9) elektrisch oder mechanisch betätigt wird.

## Claims

1. Air conditioning system for a motor vehicle, with a cold accumulator located in a refrigerant circuit (2) and with an evaporator (3) for cooling the air to be conditioned for the interior, wherein the air conditioning system (1) comprises a heat exchanger (4) containing a cold accumulator medium for cooling the air, said heat exchanger (4) being installed into a separate circuit (5) comprising an accumulator (8) for the cold accumulator medium, **characterised in that** the accumulator (8) is designed as a twin cylinder with two chambers (13, 14), **in that** the accumulator (8) comprises a flexible membrane (10) acting as a partition for the two chambers (13, 14), and **in that** a flexible membrane (10) or a solid partition separating two chambers (13, 14) in the accumulator (8) is adjustable by means of an actuator (9).

2. Air conditioning system according to claim 1, **characterised in that** the actuator (9) comprises a servomotor (11) and a threaded rod (12).

3. Air conditioning system according to any of the preceding claims, **characterised in that** a saline solution is used as a cold accumulator medium.

4. Method for the operation of an air conditioning system (1) according to any of claims 1 to 6, **characterised in that**, in the idle stop mode, an actuator (9) is operated to cause a cold accumulator medium to be carried through the heat exchanger (4), the actuator (9) moving a membrane (10) or partition in an accumulator (8), whereby the size of two adjacent chambers (13, 14) is changed and a cold accumulator medium contained in the chambers (13, 14) is transferred from one chamber (13 or 14) into the other chamber (14 or 13) through the second evaporator (4).

5. Method according to claim 4, **characterised in that**, in normal operation, the membrane (10) or partition in the accumulator (8) is moved in the opposite direction to charge the accumulator (8).

6. Method according to claim 4 or 5, **characterised in that** the actuator (9) is operated electrically or mechanically.

## Revendications

1. Système de climatisation pour un véhicule automobile, comprenant un compresseur disposé dans un circuit de fluide frigorigène (2) et un évaporateur (3) servant au refroidissement de l'air à climatiser pour l'habitacle, où le système de climatisation (1) présente un échangeur de chaleur (4) servant au refroidissement de l'air, échangeur de chaleur qui contient un milieu d'accumulateur de froid, où l'échangeur de chaleur (4) est intégré à un circuit (5), configuré séparément, qui présente un accumulateur (8) pour le milieu de l'accumulateur de froid,
**caractérisé en ce que** l'accumulateur (8) est conçu à la façon d'un double cylindre comportant deux chambres (13, 14), et l'accumulateur (8) présente une membrane flexible (10) servant de paroi de séparation pour les deux chambres (13, 14), et une membrane flexible (10) ou une paroi de séparation fixe qui sépare deux chambres (13, 14) dans l'accumulateur (8) et est réglable au moyen d'un mécanisme de commande (9).

2. Système de climatisation selon la revendication 1, **caractérisé en ce que** le mécanisme de commande (9) présente un servomoteur (11) et une tige filetée (12).

3. Système de climatisation selon l'une ou l'autre des revendications précédentes, **caractérisé en ce que** l'on utilise, comme milieu pour l'accumulateur de froid, une solution saline.

4. Procédé servant au fonctionnement d'un système de climatisation (1) selon l'une quelconque des revendications 1 à 3, **caractérisé en ce qu'**un mécanisme de commande (9) est actionné au cours du fonctionnement en mode arrêt du ralenti, mécanisme de commande qui a pour effet qu'un milieu d'accumulateur de froid est transporté à travers l'échangeur de chaleur (4), où le mécanisme de commande (9), dans un accumulateur (8), déplace une membrane (10) ou paroi de séparation, faisant que la taille de deux chambres voisines (13, 14) se modifie, et un milieu d'accumulateur de froid contenu dans les chambres (13, 14) est transporté à travers le deuxième échangeur de chaleur (4), passant d'une première chambre (13 ou 14) à l'autre chambre (14 ou 13).

5. Procédé selon la revendication 4, **caractérisé en ce que**, au cours du fonctionnement normal, la membrane (10) ou paroi de séparation disposée dans l'accumulateur (8) est déplacée en sens inverse pour la charge de l'accumulateur (8).

6. Procédé selon l'une ou l'autre des revendications 4 et 5, **caractérisé en ce que** le mécanisme de commande (9) est actionné électriquement ou mécaniquement.
